# EUROPÄISCHE PATENTANMELDUNG

(11) **EP 2 050 667 A1**
(43) Veröffentlichungstag der Anmeldung: **22.04.2009**
(21) Anmeldenummer: 08105387.8
(22) Anmeldetag: 19.09.2008
(51) Int. Cl.: B62K 21/08, F16F 9/14

(54) **Elektronisch ansteuerbare Dämpfungsvorrichtung für Fahrzeuglenkung**

(30) Priorität: 15.10.2007 DE 102007049353
(71) Anmelder: Robert Bosch GmbH, 70442 Stuttgart (DE)
(72) Erfinder: Moerbe, Matthias, 74360 Ilsfeld-Helfenberg (DE)

(57) **Zusammenfassung**

Die Erfindung betrifft eine elektronisch ansteuerbare Dämpfungsvorrichtung (26) für eine Fahrzeuglenkung. Insbesondere Fahrzeuge, die durch eine Lenkstange (12) lenkbar sind, sind mit derartigen Dämpfungsvorrichtungen (26) bestückt, um Pendelbewegungen um die Lenkachse Z dieser Lenkstange (12) abzumildern.

Die Erfindung schlägt vor, einen Beschleunigungen erfassenden Sensor (34) einzusetzen, um die bei einer Lenkbewegung an der Lenkstange (12) angreifenden Beschleunigungswerte zu erfassen und eine Drosseleinrichtung (38) der Dämpfungsvorrichtung (26) unter anderem in Abhängigkeit der Signale dieses Sensors (34) zu steuern.

## Beschreibung

### Stand der Technik

Die Erfindung geht aus von einer elektronisch ansteuerbaren Dämpfungsvorrichtung für eine Fahrzeuglenkung entsprechend den gattungsbildenden Merkmalen des Anspruchs 1.

Insbesondere Fahrzeuge, die mittels einer Lenkstange lenkbar sind, beispielsweise Zweiräder oder vierrädrige Fahrzeuge mit einem Motorradchassis, sogenannte "Quads", werden mit derartigen Dämpfungsvorrichtungen ausgestattet, um Pendelbewegungen um die Lenkachse zu dämpfen.

Pendelbewegungen können sich bei derartige Fahrzeugen beispielsweise einstellen, wenn die Lenkung schlagartig, durch außermittig einwirkende Kräfte in eine Drehbewegung versetzt wird und daraufhin fahrwerksseitig ausgelöste Rückstellkräfte versuchen die Fahrzeuglenkung wieder in Geradeausfahrtstellung zu bringen. Dabei kann sich das System derart aufschaukeln, dass im Extremfall dem Fahrer die Lenkstange aus den Händen gerissen wird.

Auslöser für derartige Pendelbewegungen während des Fahrbetriebs können beispielsweise Bodenwellen sein, insbesondere dann, wenn beim Überfahren einer Bodenwelle die Lenkung eingeschlagen ist und/oder das Fahrzeug sich infolge einer Kurvenfahrt in Schräglage befindet. Begünstigt wird die Entstehung von Pendelbewegungen auch durch eine sportliche, auf Handlichkeit getrimmte Fahrwerksgeometrie, durch Reifen mit geringer Eigendämpfung, beispielsweise infolge eines niedrigen Reifenquerschnitts oder durch hart abgestimmte Fahrwerke.

Am Markt erhältliche Dämpfungsvorrichtungen umfassen ein an einem Chassis des Fahrzeugs fest verankertes Gehäuse, eine im Gehäuse ausgebildete, mit Druckmittel befüllte Dämpfungskammer und einen beweglich in der Dämpfungskammer angeordneten Dämpfungskörper. Eine Betätigungseinrichtung für den Dämpfungskörper ist an der Lenkstange des Fahrzeugs angelenkt, so dass der Dämpfungskörper im Falle einer Lenkbewegung betätigt wird. Eine durch die Betätigung des Dämpfungskörpers bewirkte Verdrängung von Druckmittel ist mittels einer vorhandenen Drosseleinrichtung dämpfbar.

Bei derart Systemen steigt die von der Drosselvorrichtung bewirkte Dämpfung in Abhängigkeit der Geschwindigkeit eines Dämpfungskörpers progressiv an. Es ist zudem bekannt, das Grenzmaß der Dämpfung manuell durch den Fahrer einstellbar zu machen.

Darüber hinaus sind auch Systeme bekannt, bei denen die Dämpfungseigenschaften der Drosselvorrichtung elektronisch veränderlich sind. Letzte verfügen hierfür über ein elektronisches Steuergerät, das zur Ermittlung von Ansteuersignalen für die Drosselvorrichtung den Lenkwinkel und die Fahrzeuggeschwindigkeit erfasst und auswertet.

Bekannte Systeme beziehen demnach stets die Geschwindigkeit einer Lenkstangenbetätigung in die Verstellung der Dämpfungseigenschaften ein. Elektronisch regelbare Systeme erfassen dabei zusätzlich noch die Fahrzeuggeschwindigkeit.

Dennoch haben bekannte Systeme den Nachteil, dass sie bei sehr geringen bzw. bei extrem hohen Lenkgeschwindigkeiten lediglich eine begrenzte Anpassung der Dämpfungseigenschaften ermöglichen. Für das Fahrverhalten eines Fahrzeugs insbesondere eines Zweirads oder eines Quads, ist es vorteilhaft bei langsam verlaufenden Lenkvorgängen gar keine Dämpfungswirkung zu haben, während bei extremen Beschleunigungen der Lenkstange eine starke Dämpfungswirkung wünschenswerte ist, um unerwünschten Pendelbewegungen bereits in der Aufbauphase entgegen zu wirken.

Im Steuergerät durchführbare Rechenoperationen zur mittelbaren Bestimmung, der an einer Lenkstange auftretenden Beschleunigungen aus einem Weg- oder Geschwindigkeitssignal erfordern einen verhältnismäßig großen Programmieraufwand und unterliegen insbesondere bei kleinen Lenkwinkeln oder bei kurzfristigen schnellen Lenkstangenbewegungen einem unerwünschten Zeitverzug. Zudem weichen unter den erläuterten Extrembedingungen die errechneten Werte oftmals deutlich von den tatsächlichen Istwerten der Beschleunigung ab.

### Offenbarung der Erfindung

Demgegenüber weist eine elektronisch ansteuerbare Dämpfungsvorrichtung entsprechend den Merkmalen des Anspruchs 1 den Vorteil auf, dass die bei einer Lenkbewegung auftretenden Beschleunigungen an der Lenkstange unmittelbar durch wenigstens einen Beschleunigungen erfassenden Sensor erfasst werden und zur Ansteuerung der Dämpfungsvorrichtung herangezogen werden.

Liegen die erfassten Beschleunigungswerte unterhalb einer Schwelle, welche Pendelbewegungen um die Lenkachse auslösen, die vom Fahrer des Fahrzeugs ohne Schwierigkeiten beherrschbar sind, lässt sich die Dämpfungsvorrichtung derart ansteuern, dass gar keine Dämpfungswirkung stattfindet. Im umgekehrten Fall lässt sich bei auftretenden hohen und/oder kurzfristigen Beschleunigungen, die Drosselvorrichtung in Richtung maximaler Dämpfungswirkung ansteuern.

Weitere Vorteile oder vorteilhafte Weiterbildungen der Erfindung ergeben sich aus den Unteransprüchen oder der nachfolgenden Beschreibung.

### Zeichnung

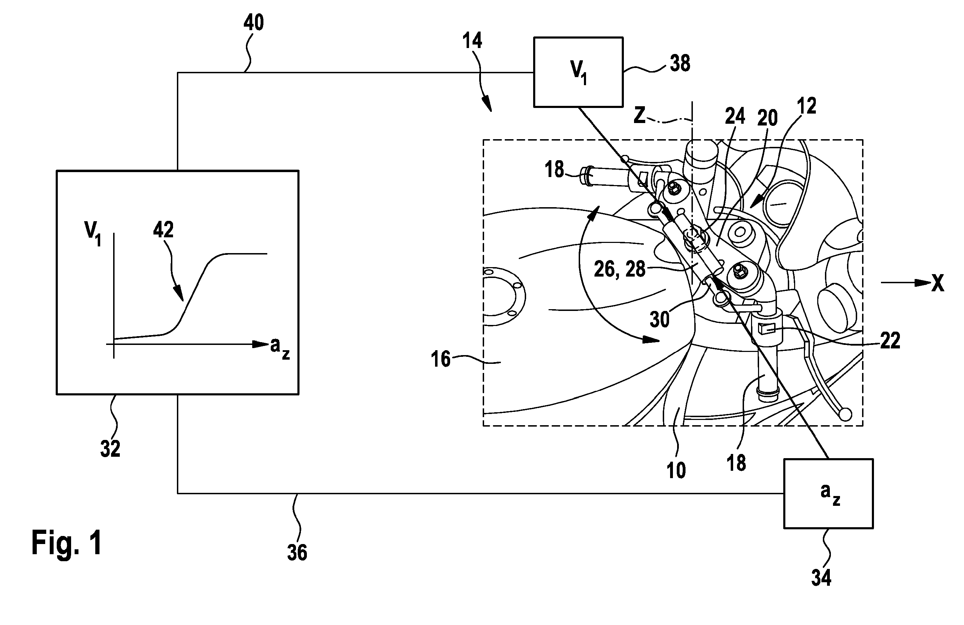

Ein Ausführungsbeispiel der Erfindung ist in der Zeichnung dargestellt und in der nachfolgenden Beschreibung näher erläutert. Die Figur zeigt anhand einer schematischen Darstellung die Komponenten einer erfindungsgemäßen Dämpfungsvorrichtung und deren Wirkungsverbindungen.

Beschreibung des Ausführungsbeispiels

Zur Erläuterung der Erfindung ist in der einzigen Figur das Chassis 10 und die Lenkstange 12 eines Motorrads 14 als Bildausschnitt dargestellt. Die Erfindung ist allerdings nicht auf Motorräder eingeschränkt ist, sondern ist auf alle Fahrzeuge anwendbar, die durch eine Lenkstange lenkbar sind, also beispielsweise auch auf vierrädrige Fahrzeuge mit Motorradchassis, wie sie unter der Bezeichnung "Quads" bekannt sind. Unter einer Lenkstange wird im Folgenden eine Einrichtung zur Lenkungsbetätigung verstanden, die stangenförmig ausgebildet ist, wobei sich die Längsachse dieser Einrichtung quer zu einer Fahrtrichtung X des Fahrzeugs erstreckt und um einen festen Drehpunkt in einer Betätigungsebene schwenkbar gelagert ist.

Am Chassis 10 des Motorrads 14 ist ein Kraftstofftank 16 befestigt. In Fahrtrichtung X vor diesem Kraftstofftank 16 ist die erwähnte Lenkstange 12 angeordnet. Diese weist zwei, an einander gegenüberliegenden Enden angeordnete und gegen die Fahrtrichtung X geneigte Handgriffe 18 auf. Letztere sind fest an einem Mittelstück 20 der Lenkstange 12 angebracht. Im Falle des in der Figur unteren Handgriffs 18 befindet sich zwischen diesem und dem Mittelstück 20 eine elektrische Schaltereinrichtung 22. Diese ist durch den Fahrer manuell betätigbar und dient zur Aktivierung elektrischer Verbraucher, beispielsweise dem Fahrtlicht oder dem Blinker des Motorrads 14.

Die Lenkstange 12 ist schwenkbar am Chassis 10 des Fahrzeugs gelagert. Von dieser Lagerstelle ist in der Figur eine Schrauben/Mutter-Verbindung 24 zu erkennen. Diese befindet sich mittig zwischen den beiden Handgriffen 18 an einem in Fahrtrichtung X hinteren Ende des Mittelstücks 20 der Lenkstange 12. Die Lenkstange 12 ist dadurch um eine Lenkachse Z verschwenkbar, die senkrecht zur Fahrtrichtung X in Richtung der Längsachse der Schrauben/Muttern-Verbindung 24 verläuft und die die Betätigungsebene der Lenkstange 12 unter einem rechten Winkel schneidet.

Im Bereich der Lagerstelle der Lenkstange 12 ist eine erfindungsgemäße Dämpfungsvorrichtung 26 drehfest am Chassis 10 verankert. Diese weist ein Gehäuse 28 auf, das in seinem Inneren wenigstens eine in der Figur nicht zu erkennende Druckkammer aufweist in der wenigstens ein Dämpfungskörper beweglich aufgenommen ist. Der Dämpfungskörper ist mit einer Betätigungsvorrichtung in Form einer Koppelstange 30 versehen, die seitlich aus dem Gehäuse 28 der Dämpfungsvorrichtung 26 herausragt. Die Koppelstange 30 ist gelenkig an der Lenkstange 12 befestigt. Eine Lenkbewegung führt damit zu einer Betätigung der Koppelstange 30 und zu einer Betätigung des Dämpfungskörpers im Inneren der Druckkammer. Die Druckkammer ist mit einem Druckmittel, beispielsweise einem Hydrauliköl, befüllt. Mit einer Betätigung des Dämpfungskörpers findet deshalb eine Verdrängung von Druckmittel durch den Dämpfungskörper statt.

Die Dämpfungsvorrichtung 26 ist darüber hinaus mit einer Drosseleinrichtung 38 ausgestattet, welche der erläuterten Verdrängung des Druckmittels einen Widerstand entgegen stellt und damit eine Bedämpfung der Betätigung der Lenkstange 12 erlaubt. Die Drosseleinrichtung 38, die in der Figur anhand eines Schaltungssymbols dargestellt ist, ist elektronisch ansteuerbar, wodurch das Dämpfungsverhalten anwendungsspezifisch einstellbar ist. Beispielsweise kann die Dämpfungsvorrichtung 38 hierzu mit wenigstens einem elektronisch ansteuerbaren Magnetventil V1 ausgestattet sein, das einen vom Druckmittel durchströmbaren Querschnitt der Dämpfungsvorrichtung 26 steuert. Besonders geeignet hierfür wäre ein in Proportionaltechnik ausgeführtes Magnetventil V1, da dieses eine zum Ansteuersignal proportionale Veränderung des Strömungsquerschnitts ermöglicht.

Die Ansteuerung der Drosseleinrichtung 38 wird von einem elektronischen Steuergerät 32 geregelt. Dieses kann an einer beliebigen Stelle des Fahrzeugs befestigt sein und kommuniziert über eine Verbindung 36 mit wenigstens einem Sensor 34, welcher ein die Lenkbewegung beschreibendes Signal abgibt. Das Steuergerät 32 wertet die eingehenden Signale des Sensors 34 zu Ansteuersignalen für die elektronisch ansteuerbare Drosseleinrichtung 38 aus, welche über eine Verbindung 40 ebenfalls mit dem Steuergerät 32 kommuniziert. Im elektronischen Steuergerät 34 können digitalisierte Kennlinien 42 abgespeichert sein, die eine Zuordnung der Ansteuerwerte zu den gemessenen Sensorwerten ermöglichen.

Erfindungsgemäß ist wenigstens ein Beschleunigungen erfassender Sensor 34 vorgesehen. Dieser Sensor 34 ist beispielsweise an geeigneter Stelle der Lenkstange 12 oder der Koppelstange 30 der Dämpfungsvorrichtung 26 angeordnet oder ist abseits der Dämpfungsvorrichtung 26, beispielsweise in die elektrischen Schaltereinheit 22 zwischen dem Handgriff 18 und dem Mittelstück 20 der Lenkstange 12 integriert.
Der wenigstens eine Sensor 24 ist derart ausgelegt, dass er zumindest die in der Betätigungsebene der Lenkstange 12 auftretenden Beschleunigungswerte a_{z} erfasst und dem Steuergerät 32 weiter leitet. Als Sensor 34 eignen sich hierfür insbesondere in Schichttechnik aufgebaute mikromechanische Beschleunigungssensoren, wie sie zum allgemeinen Stand der Technik zählen und daher an dieser Stelle keiner weiteren Erläuterung bedürfen.

Selbstverständlich sind Änderungen oder Ergänzungen vorstellbar, ohne vom Grundgedanken der Erfindung abzuweichen.

## Patentansprüche

1. Elektronisch ansteuerbare Dämpfungsvorrichtung (26) für eine Fahrzeuglenkung, insbesondere für Fahrzeuge, die mittels einer Lenkstange (12) gelenkt werden, umfassend ein an einem Chassis (10) des Fahrzeugs fest anordenbares Gehäuse (28), eine im Gehäuse (28) ausgebildete und mit Druckmittel befüllte Dämpfungskammer, einen in der Dämpfungskammer beweglich aufgenommenen, Druckmittel verdrängenden Dämpfungskörper, eine Betätigungsvorrichtung (30) für den Dämpfungskörper, die an der Lenkstange (12) angelenkt ist, eine elektronisch ansteuerbare Drosseleinrichtung (38) und ein die Ansteuerung der Drosseleinrichtung (38) bestimmendes elektronisches Steuergerät (32),
**dadurch gekennzeichnet,**
**dass** wenigstens ein Beschleunigungen erfassender Sensor (34) vorgesehen ist, und dass eine Ansteuerung der Dämpfungsvorrichtung (26) durch das elektronische Steuergerät (32) in Abhängigkeit der Signale dieses Beschleunigungen erfassenden Sensors (34) erfolgt.

2. Elektronisch ansteuerbare Dämpfungsvorrichtung nach Anspruch 1, **dadurch gekennzeichnet, dass** der wenigstens eine Beschleunigungen erfassende Sensor (34), die bei einer Betätigung der Lenkstange (12) an dieser Lenkstange (12) auftretenden Beschleunigungen erfasst.

3. Elektronisch ansteuerbare Dämpfungsvorrichtung nach Anspruch 1 oder 2, **dadurch gekennzeichnet, dass** der wenigstens eine Beschleunigungen erfassende Sensor (34) an der Dämpfungsvorrichtung (26) angeordnet ist.

4. Elektronisch ansteuerbare Dämpfungsvorrichtung nach Anspruch 1 oder 2, **dadurch gekennzeichnet, dass** das Fahrzeug ein Motorrad (14) ist, das zur manuellen Aktivierung von elektrischen Verbrauchern durch den Fahrer eine elektrische Schaltereinheit (22) aufweist, die an der Lenkstange (12) angeordnet ist und dass der Beschleunigungen erfassende Sensor (34) an dieser Schaltereinheit (22) angeordnet ist.

5. Elektronisch ansteuerbare Dämpfungsvorrichtung nach einem der Ansprüche 1 bis 4, **dadurch gekennzeichnet, dass** der Beschleunigungen erfassende Sensor (34) ein in Schichttechnik aufgebauter mikromechanischer Beschleunigungssensor ist.

6. Elektronisch ansteuerbare Dämpfungsvorrichtung nach einem der Ansprüche 1 bis 5, **dadurch gekennzeichnet, dass** die Drosseleinrichtung (38) wenigstens ein elektronisch ansteuerbares Magnetventil (V1) aufweist.

7. Elektronisch ansteuerbare Dämpfungsvorrichtung nach Anspruch 6, **dadurch gekennzeichnet, dass** das Magnetventil (V1) ein von einer Schließstellung in eine Offenstellung stufenlos umsteuerbares Proportionalventil ist.
